# EUROPÄISCHE PATENTSCHRIFT

(11) **EP 0 413 660 B1**
(45) Veröffentlichungstag und Bekanntmachung des Hinweises auf die Patenterteilung: **17.11.1994**
(21) Anmeldenummer: 90810595.0
(22) Anmeldetag: 07.08.1990
(51) Int. Cl.: G02B 6/38

(54) **Lichtwellenleitersteckverbindung**
Fibre optic connector
Connecteur à fibre optique

(30) Priorität: 14.08.1989 CH 2977/89
(43) Veröffentlichungstag der Anmeldung: 20.02.1991
(73) Patentinhaber: CIBA-GEIGY AG, 4002 Basel (CH)
(72) Erfinder: van den Bergh, Hubert, Dr., CH-1376 Goumoens-La-Ville (CH); Wagnières, Georges, CH-1095 Lutry (CH)

(56) Entgegenhaltungen:
- EP-A- 63 085
- EP-A- 0 235 992
- EP-A- 0 246 166
- WO-A-82/01942
- FR-A- 2 301 023
- FR-A- 2 399 673
- US-A- 4 252 403
- US-A- 4 557 554

## Beschreibung

Die Erfindung betrifft eine Lichtwellenleitersteckverbindung zum Einspeisen von Laserlicht von einem ankommenden Lichtwellenleiter in einen wegführenden Lichtwellenleiter mit einem metallischen Steckergehäuse, das über ein metallisches Zentriermittel verfügt, in das der in einem ersten Stecker vorgesehene, ankommende Lichtwellenleiter und der in einem zweiten Stecker vorgesehene, wegführende Lichtwellenleiter ragen, wobei die Stirnflächen der beiden Lichtwellenleiter einander gegenüber mit einem kleinen Spalt zwischen ihnen angeordnet sind.

Eine derartige Multimode-Lichtwellenleitersteckverbindung für die Nachrichtentechnik zum Übertragen von kleinen Lichtleistungen ist aus dem Prospektblatt "Connecteur optique - haute performance, série PFO" der Firma Radiall bekannt. Bei der vorbekannten Steckverbindung sind die zu verbindenen, jeweils in einem Stecker fixierten gleichartigen Multimode-Lichtwellenleiter auf Stoß in das Steckergehäuse eingeschoben. In dem verbleibenden Spalt zwischen ihnen ist eine Indexanpassungsimmersion vorgesehen.

Eine solche Multimode-Lichtwellenleitersteckverbindung ist für die Übertragung großer Lichtleistungen im Bereich von mehreren 10 Watt im Dauerstrichbetrieb ungeeignet, da durch die im Bereich der Stirnflächen durch Reflexions- und Absorptionsverluste entstehende Wärme die Indexanpassungsimmersion verdampft und somit die Lichtwellenleitersteckverbindung zerstört.

Aus "Einführung in die optische Nachrichtentechnik" von Ralf Th. Kersten, Springer, Berlin 1983, Seiten 340-345 ist bekannt, daß durch einen axialen Versatz in Gestalt eines Spaltes zwischen zwei identischen Lichtwellenleitern große Kopplungsverluste auftreten, wenn der Brechungsindex des Mediums in dem Spalt zwischen den Stirnflächen von dem Brechungsindex des Lichtwellenleiterkerns abweicht.

Weiterhin wird dort auf den Seiten 333 bis 339 ausgeführt, daß theoretisch keine Verluste bei der Kopplung zweier Lichtwellenleiter miteinander auftreten, wenn die Kerndurchmesser, die numerischen Aperturen und die Indexprofile der Lichtwellenleiter identisch sind. Gilt für eins dieser drei Maße, daß der entsprechende Wert für den ankommenden Lichtwellenleiter kleiner als der dazugehörige Wert des wegführenden Lichtwellenleiters ist, dann treten gemäß der dortigen Lehre unerwünschte, nachteilige Kopplungsverluste durch die unterschiedlichen und bei der Kopplung ineinander zu überführenden Feldverteilungen in den beiden Lichtwellenleitern auf. Es wird außerdem vorgeschlagen, Lichtwellenleiter-Lichtwellenleiter-Verbindungen möglichst durch Spleiße zu bilden, da dann keine Zentrier- und Versatzprobleme bezüglich der beiden Lichtwellenleiter entstehen.

Eine Lichtwellenleitersteckverbindung ist auch aus der EP-A-0,063,085 bekannt. Die in diesem Dokument offenbarte Lichtwellenleitersteckverbindung weist einen ankommenden und einen wegführenden Lichtwellenleiter auf, ferner zwei Stecker und ein metallisches Steckergehäuse, welches über ein Zentriermittel in Form einer Kugel mit einer Durchgangsbohrung verfügt. In diese Durchgangsbohrung ragen sowohl der in dem ersten Stecker vorgesehene ankommende als auch der in dem zweiten Stecker vorgesehene wegführende Lichtwellenleiter hinein. Die Stirnflächen der beiden Lichtwellenleiter liegen einander gegenüber mit einem kleinen Spalt zwischen ihnen. Beim Einkoppeln von Laserlicht grosser Energie, beispielsweise im Bereich von einigen zehn Watt im Dauerstrichbetrieb, kann es aber zu (thermisch bedingten) Beschädigungen des wegführenden Lichtwellenleiters bzw. seiner Stirnfläche kommen, was eine Beschädigung oder Untauglichkeit der ganzen Steckverbindung zur Folge haben kann.

Ausgehend von diesem Stand der Technik liegt der Erfindung die Aufgabe zugrunde eine Multimode-Lichtwellenleitersteckverbindung zum Übertragen grosser Dauerstrich-Lichtleistungen zu schaffen, wobei die Lichtleistung beispielsweise einige zehn Watt beträgt.

Diese Aufgabe wird durch die Merkmale im kennzeichnenden Teil des Patentanspruchs 1 gelöst.

Die Verwendung eines im kerndurchmesser um mindestens ein Drittel größeren Lichtwellenleiters in Verbindung mit einem kleinen Luftspalt gestattet die sichere Überkopplung von hohen Dauerstrichlaserleistungen. Die dabei unvermeidlich entstehende Kopplungswärme wird an ein wärmeabführendes Gehäuse abgegeben. Der Luftspalt zwischen den Stirnflächen der zu koppelnden Lichtwellenleitern gestattet in der relativ staub- und keimfreien Umgebung eines Operationssaals die einfache und sichere Auswechslung verschiedener, an den ankommenden Lichtwellenleiter anzuschließenden Behandlungs- und Operationsgeräten. Dies kann vom Operationspersonal durchgeführt werden, während der das Licht liefernde Laser in einem Nebenraum gewartet und justiert werden kann.

Die Dicke des Spaltes zwischen den Stirnflächen liegt im Bereich zwischen 5 und 30 Mikrometer, so daß die Koppelverluste durch die im Luftspalt sich divergent ausbreitende Strahlung gering bleiben.

Dadurch, daß die numerische Apertur des wegführenden Lichtwellenleiters um mindestens die Hälfte größer als die numerische Apertur des ankommenden Lichtwellenleiters ist, wird das aus dem ankommenden Lichtwellenleiter austretende Laserlicht effizient in den wegführenden Lichtwellenleiter eingekoppelt.

In einer Ausgestaltung der Erfindung ist eine metallische, durchbohrte Kugel als Zentriermittel vorgesehen, auf die von jeder Seite her jeweils ein Zentrierkonus der Stecker aufgleitet. Dadurch lassen sich verschiedene Stecker auf der Hauptachse der Steckverbindung zentrieren.

Bei einem bevorzugten Ausführungsbeispiel sind die Lichtwellenleiterenden jeweils in einem Metalltubus fixiert. Die Metalltuben sind jeweils mit Hilfe einer weichen Metallmasse in Bohrungen der Stecker derart fest justiert, daß die Kerne der fixierten Lichtwellenleiter miteinander fluchten und bezüglich Innenteilen der Stecker konzentrisch angeordnet sind. Dadurch kann in einfacher Weise ein im Verhältnis zum Fasermantel nicht konzentrisch angeordneter Faserkern mit der Hauptachse des Steckers fluchtend angeordnet werden, so daß bei den hohen zu koppelnden Lichtleistungen die Strahlung möglichst mittig in den Lichtwellenleiterkern des wegführenden Lichtwellenleiters einkoppelbar ist.

Die Lichtwellenleiter 5 und 15 können insbesondere beide Stufenprofil-Lichtwellenleiter sein, so daß die Feldverteilungen in den Lichtwellenleitern ähnlich ist.

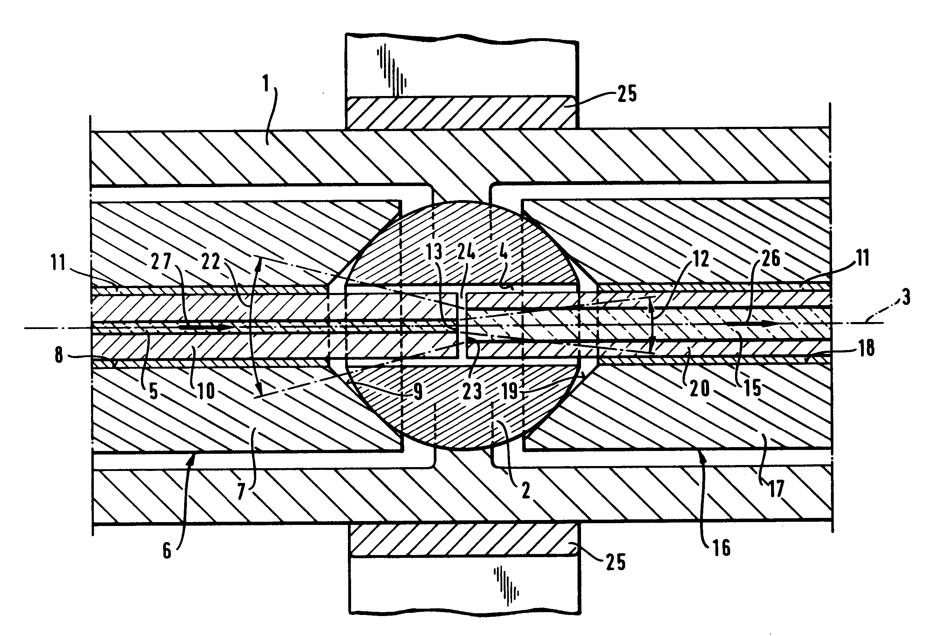

Nachfolgend wird die Erfindung anhand der Zeichnung näher erläutert, die in einer einzigen schematischen Figur eine erfindungsgemäße Multimode-Lichtwellenleitersteckverbindung zeigt.

Die Lichtwellenleitersteckverbindung verfügt über ein metallisches, im wesentlichen hohlzylindrisches Steckergehäuse 1, in dem mittig eine metallische Zentrierkugel 2 vorgesehen ist, die in einer gut wärmeleitenden Verbindung mit dem Steckergehäuse 1 steht. Die Zentrierkugel 2 ist längs einer Radialachse durchbohrt, die mit der Hauptachse 3 der Lichtwellenleitersteckverbindung fluchtet. Die Bohrung 4 in der Zentrierkugel 2 weist einen zur Aufnahme von ummantelten Lichtwellenleitern ausreichenden Durchmesser auf.

In das Steckergehäuse 1 ist ein mit einem ankommenden Lichtwellenleiter 5 versehener, zylindrischer Stecker 6 eingeschoben. Der Stecker 6 verfügt vorteilhafterweise über einen in der Zeichnung nicht dargestellten äußeren Innengewindering, der in ein auf dem Steckergehäuse 1 angebrachtes Außengewinde eingreift. so daß der Stecker 6 mit dem Steckergehäuse 1 fest verbindbar ist.

Das zylindrische Innenteil 7 des Steckers 6 weist eine durchgehende Bohrung 8 auf, in der der ankommende Lichtwellenleiter 5 fixiert ist. An dem vorderen Ende des Steckers 6 ist ein Zentrierkonus 9 vorgesehen, der den zylindrischen Stecker 6 bei seiner Fixierung in dem Steckergehäuse 1 zusammen mit der Zentrierkugel 2 zur Hauptachse 3 fluchtend zentriert. Beim Fixieren des Steckers 6 durch Festdrehen des Innengewinderings auf dem Außengewinde drückt der Zentrierkonus 9 auf die Oberfläche der Zentrierkugel 2. Dabei verschiebt sich das Innenteil 7 normal zu der Hauptachse 3, bis die Achse des Steckers 6 mit der Hauptachse 3 fluchtet.

Der ankommende Lichtwellenleiter 5 ist in einem röhrenförmigen Metalltubus 10 fixiert, der in der Bohrung 8 des Steckers 6 mit Hilfe einer leicht verformbaren, metallischen Fixiermasse 11 befestigt ist. Der Metalltubus 10 besteht vorteilhafterweise aus Aluminium oder Stahl, die Fixiermasse 11 aus Blei.

Der ankommende Lichtwellenleiter 5 verfügt über einen Kern und einen Mantel, die in der Zeichnung nicht getrennt gezeichnet sind. Beim Fertigungsprozeß eines Lichtwellenleiters treten Fehlanpassungen der Konzentrität des Kerns mit dem Mantel auf. Da der Mantel des Lichtwellenleiters 5 in dem Metalltubus 10 fixiert ist, liegen der Kern des Lichtwellenleiters 5 und der Metalltubus 10 häufig nicht konzentrisch zueinander. Der Kern wird indirekt über den Metalltubus 10 in der Bohrung 8 des Steckers 6 bei der Fertigung der Verbindung des Steckers 6 mit dem Lichtwellenleiter 5 einmalig zentriert, indem der Kern des Lichtwellenleiters 5 durch Druck auf die Fixiermasse 11 auf die Hauptachse 3 verschoben wird.

Durch das Umgreifen des Zentrierkonus 9 des Innenteils 7 um die Zentrierkugel 2 des Steckergehäuses 2 ist gewährleistet, daß der Kern des ankommenden Lichtwellenleiters 5 mit der Hauptachse 3 fluchtet.

Der ankommende Lichtwellenleiter 5 kann z.B. eine Monomodeglasfaser mit einem Kerndurchmesser von wenigen Mikrometern sein. Vorzugsweise ist der ankommende Lichtwellenleiter 5 eine Multimodefaser mit einem Kerndurchmesser von z.B. 200 Mikrometer, die einen Manteldurchmesser von 280 Mikrometer aufweist. Die Numerische Apertur dieser Glasfaser beträgt zum Beispiel 0,21 und der vereinfacht gezeichnete geometrische Austrittswinkel 12 aus der Stirnfläche 13 beträgt zum Beispiel 13 Grad.

In das Steckergehäuse 1 ist von der dem Stecker 6 entgegengesetzten Seite ein mit einem weg führenden Multimode-Lichtwellenleiter 15 versehener, zylindrischer Stecker 16 eingeschoben. Der Stecker 16 verfügt wie der Stecker 6 vorteilhafterweise über einen in der Zeichnung nicht dargestellten das Steckergehäuse 1 umfassenden Gewindering, mit Hilfe dessen der Stecker 16 mit dem Steckergehäuse 1 fest verbindbar ist.

Das zylindrische Innenteil 17 des Steckers 16 weist eine durchgehende Bohrung 18 auf, in der der wegführende Lichtwellenleiter 15 fixiert ist. An dem vorderen Ende des Steckers 16 ist ein Zentrierkonus 19 vorgesehen, der den zylindrischen Stecker 16 bei seiner Fixierung in dem Steckergehäuse 1 zusammen mit der Zentrierkugel 2 zur Hauptachse 3 fluchtend zentriert.

Der wegführende Lichtwellenleiter 15 ist in einem vorzugsweise aus dem gleichen Metall wie der Metalltubus 10 bestehenden röhrenförmigen Metalltubus 20 fixiert, der in der Bohrung 18 des Steckers 16 mit Hilfe der metallischen Fixiermasse 11 befestigt ist. Dabei liegen der Kern des wegführenden Lichtwellenleiters 15 und der Außenradius des Innenteils 17 konzentrisch zueinander.

Der wegführende Lichtwellenleiter 15 verfügt über einen Kern und einen Mantel, die in der Zeichnung nicht getrennt gezeichnet sind. Der Kern des wegführenden Lichtwellenleiters 15 wird analog dem Kern des ankommenden Lichtwellenleiters 5 indirekt über den Metalltubus 10 in der Bohrung 18 des Steckers 16 fixiert.

Durch das Umgreifen des Zentrierkonus 19 des Innenteils 17 um die Zentrierkugel 2 ist gewährleistet, daß der Kern des wegführenden Lichtwellenleiters 15 mit der Hauptachse 3 und damit mit dem Kern des ankommenden Lichtwellenleiters 5 fluchtet.

Der wegführende Lichtwellenleiter 15 für die Übertragung großer Dauerstrichleistungen besteht vorteilhafterweise aus einer Multimode-Lichtleitfaser mit einem großen Kerndurchmesser von z.B. 600 Mikrometer, die einen Durchmesser des zumeist aus Kunststoff aufgebauten Mantels von 1000 Mikrometer aufweist. Die Numerische Apertur dieser Glasfaser beträgt zum Beispiel 0,48 und der vereinfacht gezeichnete geometrische maximale Eintrittswinkel 22 in die Stirnfläche 23 beträgt zum Beispiel 29 Grad.

Die Stirnflächen 13 und 23 der miteinander fluchtenden Kerne des ankommenden Lichtwellenleiters 5 bzw. des wegführenden Lichtwellenleiters 15 sind in einem Abstand von ungefähr 5 bis 30 Mikrometer voneinander angeordnet. Der durch diesen Abstand gebildete Spalt 24 ist nur mit Luft und keinem Koppelmedium gefüllt. Durch einen Pfeil 27 symbolisiertes, in dem ankommenden Lichtwellenleiter 5 geführtes Laserlicht tritt aus der Stirnfläche 13 aus dem ankommenden Lichtwellenleiter 5 in den Gasraum des Spaltes 24 aus. Das im wesentlichen mit dem Öffnungswinkel 12 austretende Laserlicht koppelt über die Stirnfläche 23 in den wegführenden Lichtwellenleiters 15 ein und wird in der Richtung des Pfeils 26 in dem wegführenden Lichtwellenleiter 15 seinem Verwendungszweck zugeführt.

Die Stirnflächen 13 und 23 der Lichtwellenleiter 5 und 15 sind vorzugsweise entspiegelt. Durch die unterschiedlichen Kerndurchmesser, die unterschiedlichen numerischen Aperturen und die notwendigerweise unterschiedlichen Feldverteilungen in den Lichtwellenleiter 5 und 15 treten Koppelverluste auf. Bei einem Betrieb der Multimode-Lichtwellenleitersteckverbindung bei 1064 Nanometern Lichtwellenlänge und 70 matt Dauerstrich-Lichtleistung entstehen bei einer erfindungsgemäßen Steckverbindung einige Watt Verlustwärme.

Die Verlustwärme wird über die metallische Zentrierkugel 2 an das Steckergehäuse 1 weitergeleitet. Das Steckergehäuse 1 ist mit einem großflächigen Kühlgehäuse 25 wärmeleitend verbunden, das über Rippen zur Wärmeableitung verfügen kann.

Die Lichtwellenleiter 5 und 15 können insbesondere zur Angleichung der Feldverteilungen des geführten Laserlichtes beide Stufenprofil-Lichtwellenleiter sein.

Der Laser und seine zu justierenden Elemente können beim Einsatz der beschriebenen Lichtwellenleitersteckverbindung außerhalb des Operationssaals angeordnet werden. Der ankommende Lichtwellenleiter 5 führt vom Laser in den Operationssaal. Mit Hilfe der Multimode-Lichtwellenleitersteckverbindung lassen sich Dauerstrichleistungen von bis zu einige 100 Watt bei sichtbarem bis infrarotem Laserlicht mit hohem Kopplungsgrad ohne Gefahr für die Stirnflächen 13 bzw. 23 der Kopplungsverbindung übertragen. Insbesondere wird die hohe Dauerstrichausgangsleistung von 70 Watt z.B. eines YAG-Lasers in den wegführenden Lichtwellenleiter 15 gefahrlos eingekoppelt. Durch die Lichtwellenleitersteckverbindung sind verschiedene medizinische Behandlungs- und Operationsgeräte nun vom Arzt einfach austauschbar.

Der Spalt 24 kann in einer anderen Ausgestaltung der Lichtwellenleitersteckverbindung auch mit einer Indexanpassungsimmersion gefüllt sein, die für die eingestrahlte Laserstrahlung vorzugsweise transparent ist.

## Patentansprüche

1. Lichtwellenleitersteckverbindung mit einem ankommenden Lichtwellenleiter (5) und einem wegführenden Lichtwellenleiter (15) zum Einspeisen von Laserlicht, welches eine grosse Lichtleistung von beispielsweise einigen zehn Watt im Dauerstrichtbetrieb aufweist, aus dem ankommenden in den wegführenden Lichtwellenleiter, mit zwei Steckern (6,16) und einem metallischen Steckergehäuse (1), das über ein metallisches Zentriermittel (2) verfügt, in das der in einem ersten Stecker (6) vorgesehene, ankommende Lichtwellenleiter (5) und der in einem zweiten Stecker (16) vorgesehene, wegführende Lichtwellenleiter (15) ragen, wobei die Stinflächen (13,23) der beiden Lichtwellenleiter (5,15) einander gegenüber mit einem kleinen Spalt (24) zwischen ihnen angeordnet sind, dadurch gekennzeichnet, dass der Kerndurchmesser des wegführenden Lichtwellenleiters (15) um mindestens ein Drittel grösser ist als der Kerndurchmesser des ankommenden Lichtwellenleiters (5), dass die numerische Apertur des wegführenden Lichtwellenleiters (15) um mindestens die Hälfte grösser ist als die numerische Apertur des ankommenden Lichtwellenleiters (5), dass die Weite des Spalts (24) zwischen den Stirnflächen (13,23) der beiden Lichtwellenleiter (5,15) zwischen fünf und dreissig Mikrometer beträgt, und dass das Steckergehäuse (1) an ein grossflächiges, wärmeabführendes Gehäuse (25) angeschlossen ist.

2. Lichtwellenleitersteckverbindung nach Anspruch 1, dadurch gekennzeichnet, dass als Zentriermittel (2) eine metallische, durchbohrte Kugel vorgesehen ist, auf die von jeder Seite jeweils ein Zentrierkonus (9,19) der Stecker (6,16) aufschiebbar ist.

3. Lichtwellenleitersteckverbindung nach einem der vorstehenden Ansprüche, dadurch gekennzeichnet, dass die Enden der Lichtwellenleiter (5,15) jeweils in einem Metalltubus (10,20) fixiert sind, die jeweils mit Hilfe einer verformbaren Metallmasse (11) in Bohrungen (8,18) derart fixiert sind, dass die Kerne der fixierten Lichtwellenleiter (5,15) miteinander fluchten und bezüglich Innenteilen (7,17) der Stecker (6,16) konzentrisch angeordnet sind.

4. Lichtwellenleitersteckverbindung nach einem der vorstehenden Ansprüche, dadurch gekennzeichnet, dass beide Lichtwellenleiter Stufenprofil-Lichtwellenleiter sind.

5. Lichtwellenleitersteckverbindung nach einem der vorstehenden Ansprüche, dadurch gekennzeichnet, dass der Kerndurchmesser des wegführenden Lichtwellenleiters (15) ungefähr ein Drittel grösser als der Kerndurchmesser des ankommenden Lichtwellenleiters (5) ist.

6. Lichtwellenleitersteckverbindung nach einem der vorstehenden Ansprüche, dadurch gekennzeichnet, dass der wegführende Lichtwellenleiter (15) ein Multimode-Lichtwellenleiter ist.

7. Lichtwellenleitersteckverbindung nach Anspruch 6, dadurch gekennzeichnet, dass der ankommende Lichtwellenleiter (5) ein Multimode-Lichtwellenleiter ist.

8. Lichtwellenleitersteckverbindung nach einem der vorstehenden Ansprüche, dadurch gekennzeichnet, dass das den Spalt (24) bildende Volumen mit Gas oder Luft gefüllt ist.

9. Lichtwellenleitersteckverbindung nach einem der vorstehenden Ansprüch 1-7, dadurch gekennzeichnet, dass das den Spalt (24) bildende Volumen mit einer Indexanpassungsimmersion gefüllt ist.

## Claims

1. An optical waveguide plug connection having an incoming optical waveguide (5) and an outgoing optical waveguide (15), for feeding laser light having a high light power of, for example, some tens of watts in continuous wave operation from the incoming optical waveguide into the outgoing optical waveguide, comprising two plugs (6, 16) and a metallic plug housing (1) which is equipped with a metallic centering element (2) into which there project the incoming optical waveguide (5) provided in a first plug (6) and the outgoing optical waveguide (15) provided in a second plug (16), the end faces (13, 23) of the two optical waveguides (5, 15) being arranged opposite each other with a small gap (24) between them, wherein the core diameter of the outgoing optical waveguide (15) is at least one third larger than the core diameter of the incoming optical waveguide (5), the numerical aperture of the outgoing optical waveguide (15) is at least one half greater than the numerical aperture of the incoming optical waveguide (5), the width of the gap (24) between the end faces (13, 23) of the two optical waveguides (5, 15) is from five to thirty micrometers, and the plug housing (1) is connected to a housing (25) of large surface area which dissipates heat.

2. An optical waveguide plug connection according to claim 1, wherein a metallic, through-bored ball is provided as the centering element (2), onto which there can be pushed from each side a centering cone (9, 19) of the respective plug (6, 16).

3. An optical waveguide plug connection according to either of the preceding claims, wherein the ends of the optical waveguides (5, 15) are fixed in respective tubular metal barrels (10, 20) which are fastened in respective bores (8, 18) with the aid of a deformable metal mass (11) in such a manner that the cores of the fixed optical waveguides (5, 15) are in alignment with each other and arranged concentrically with respect to internal parts (7, 17) of the plugs (6, 16).

4. An optical waveguide plug connection according to any one of the preceding claims, wherein both optical waveguides are stepped index optical waveguides.

5. An optical waveguide plug connection according to any one of the preceding claims, wherein the core diameter of the outgoing optical waveguide (15) is approximately one third larger than the core diameter of the incoming optical waveguide (5).

6. An optical waveguide plug connection according to any one of the preceding claims, wherein the outgoing optical waveguide (15) is a multimode optical waveguide.

7. An optical waveguide plug connection according to claim 6, wherein the incoming optical waveguide (5) is a multimode optical waveguide.

8. An optical waveguide plug connection according to any one of the preceding claims, wherein the space forming the gap (24) is filled with gas or air.

9. An optical waveguide plug connection according to any one of claims 1 to 7, wherein the space forming the gap (24) is filled with an index matching medium.

## Revendications

1. Connecteur à fiches pour conducteurs à fibre optique, comportant un conducteur à fibre optique d'arrivée (5) et un conducteur à fibre optique de sortie (15) destiné à l'alimentation en lumière laser présentant une forte puissance lumineuse de, par exemple, quelques dizaines de watts en service continu provenant du conducteur à fibre optique d'arrivée et introduite dans le conducteur à fibre optique de sortie, connecteur comportant deux fiches (6, 16) et un corps métallique de connecteur (1), qui dispose d'un moyen de centrage métallique (2) dans lequel pénètrent le conducteur à fibre optique d'arrivée (5) prévu dans une première fiche (6) et le conducteur à fibre optique (15) prévu dans une deuxième fiche (16), les surfaces frontales (13, 23) des deux conducteurs à fibre optique (5, 15) étant disposées en face l'une de l'autre avec un faible intervalle (24) entre elles, caractérisé en ce que le diamètre de l'âme du conducteur à fibre optique de sortie (15) est au moins d'un tiers plus grand que le diamètre de l'âme du conducteur à fibre optique d'arrivée (5), que l'ouverture numérique du conducteur à fibre optique de sortie (15) est supérieure d'au moins la moitié à l'ouverture numérique du conducteur à fibre optique d'entrée (5), que la largeur de l'intervalle (24) entre les surfaces frontales (13, 23) des deux conducteurs à fibre optique (5, 15) est comprise entre cinq et trente micromètres, et que le corps de connecteur (1) est raccordé à un corps (25) de grande surface qui évacue la chaleur.

2. Connecteur à fiches pour conducteurs à fibre optique selon la revendication 1, caractérisé en ce qu'est prévue en tant que moyen de centrage (2) une bille métallique percée, sur laquelle chacune des fiches (6, 16) peut être enfoncée dans un cône de centrage (9, 19) à partir de chacun des côtés.

3. Connecteur à fiches pour conducteurs à fibre optique selon l'une des revendications précédentes, caractérisé en ce que les extrémités des conducteurs à fibre optique (5, 15) sont fixées chacune dans un des tubes de métal (10, 20), ces extrémités étant fixées chacune dans des trous (8, 18) à l'aide d'une masse métallique (11) déformable ; en ce que les âmes des conducteurs à fibre optique (5, 15) fixés sont alignées l'une avec l'autre et sont disposées concentriquement aux pièces intérieures (7, 17) des fiches (6, 16).

4. Connecteur à fiches pour conducteurs à fibre optique selon l'une des revendications précédentes, caractérisé en ce que les deux conducteurs à fibre optique sont des conducteurs à profil étagé.

5. Connecteur à fiches pour conducteur à fibre optique selon l'une des revendications précédentes, caractérisé en ce que le diamètre de l'âme du conducteur à fibre optique de sortie (15) est supérieur d'environ un tiers à celui de l'âme du conducteur à fibre optique d'arrivée (5).

6. Connecteur à fiches pour conducteurs à fibre optique selon l'une des revendications précédentes, caractérisé en ce que le conducteur à fibre optique de sortie (15) est un conducteur à fibre optique multi-modes.

7. Connecteur à fiches pour conducteurs à fibre optique selon la revendication 6, caractérisé en ce que le conducteur à fibre optique d'arrivée (5) est un conducteur à fibre optique multi-modes.

8. Connecteur à fiches pour conducteurs à fibre optique selon l'une des revendications précédentes, caractérisé en ce que le volume formant l'intervalle (24) est rempli de gaz ou d'air.

9. Connecteur à fiches pour conducteurs à fibre optique selon l'une des revendications précédentes 1 à 7, caractérisé en ce que le volume formant l'intervalle (24) est rempli par un fluide d'adaptation d'indice.
